# EUROPEAN PATENT SPECIFICATION

(11) **EP 3 147 785 B1**
(45) Date of publication and mention of the grant of the patent: **24.02.2021**
(21) Application number: 15893170.9
(22) Date of filing: 25.12.2015
(51) Int. Cl.: G06F 9/48, G06F 9/50

(54) **TASK PROCESSING METHOD AND DEVICE**
VERFAHREN UND VORRICHTUNG ZUR AUFGABENVERARBEITUNG
PROCÉDÉ ET DISPOSITIF DE TRAITEMENT DE TÂCHES

(30) Priority: 10.11.2015 CN 201510763240
(43) Date of publication of application: 29.03.2017
(73) Proprietor: China Construction Bank Corporation, Beijing 100033 (CN)
(72) Inventor: ZHU, Changsheng, Beijing 100033 (CN); CHANG, Tao, Beijing 100033 (CN); LI, Chenhao, Beijing 100033 (CN); WANG, Yehong, Beijing 100033 (CN); ZHANG, Peng, Beijing 100033 (CN)
(74) Representative: Boult Wade Tennant LLP
(86) International application number: PCT/CN2015/098826
(87) International publication number: WO 2016/188102

(56) References cited:
- CN-A- 1 588 316
- CN-A- 102 393 822
- CN-A- 104 407 922
- US-A1- 2004 199 926
- US-A1- 2010 153 962
- US-A1- 2014 019 984
- XU D: "Performance Study and Dynamic Optimization Design for Thread Pool Systems", INTERNATIONAL CONFERENCE ON COMPUTER COMMUNICATION AND CONTROLTECHNOLOGIES: CCCT & INTERNATIONAL CONFERENCE ON INFORMATIONSYSTEMS ANALYSIS ANDSYNTHESIS:, XX, XX, 14 August 2004 (2004-08-14), pages 1-6, XP007903250,

## Description

### FIELD

The present disclosure relates to the technical field of job parallel processing, more particularly, to a job processing method and device.

### BACKGROUND

In a computer system, a task to be processed may be considered as a job. The process of the system processing the job may specifically be the system activating a thread to make the thread process the job. Currently, the system activates a fixed number of threads for the unprocessed jobs, and specifies which jobs need to be processed for every thread respectively. Only after all the threads complete the execution to the respective job, this batch of jobs may be considered to be executed completely.

It can be known that difference of job characteristic cause the difference of thread processing speeds, so there may occur the situation where a certain thread is executed completely, but it needs to wait for other threads, or excessive threads are started, which leads to relatively large pressure to the system. As such, the existing job processing manner is of poor processing effects.

XU D: "Performance Study and Dynamic Optimization Design for Thread Pool Systems", INTERNATIONAL CONFERENCE ON COMPUTER COMMUNICATION AND CONTROL TECHNOLOGIES: CCCT & INTERNATIONAL CONFERENCE ON INFORMATION SYSTEMS ANALYSIS AND SYNTHESIS, 14 August 2004, pages 1-6, discloses a new algorithm, named dynamicThreadPool, for thread pool size adjustment. Thread pools have been widely used by many multithreaded applications. However, the determination of the pool size according to the application behavior still remains problematic. To automate this process, in this paper we have developed a set of performance metrics for quantitatively analyzing thread pool performance. For our experiments, we built a thread pool system which provides a general framework for thread pool research. Based on this simulation environment, we studied the performance impact brought by the thread pool on different multithreaded applications. Additionally, the correlations between internal characterizations of thread pools and their throughput were also examined. We then proposed and evaluated a heuristic algorithm to dynamically determine the optimal thread pool size. The simulation results show that this approach is effective in improving overall application performance.

US 2010/153962 A1 discloses a system and method to control distribution of work items to threads in a server. The system and method include a permit dispenser that keeps track of permits, and a plurality of thread pools each including a queue with a configurable size, being configured with a desired concurrency and a size of the queue that is equal to a total number of work items to be executed by pool threads in the thread pool. The number of permits specifies a total number of threads available for executing the work items in the server. Each pool thread executes a work item in the thread pool, determines whether a thread surplus or a thread deficit exists, and shrinks or grows the thread pool respectively.

US 2004/199926 A1 discloses an enhanced staged event-driven architecture (SEDA) stage. The enhanced SEDA stage can include an event queue configured to enqueue a plurality of events, an event handler programmed to process events in the event queue, and a thread pool coupled to the event handler. A resource manager further can be coupled to the thread pool and the event queue. Moreover, the resource manager can be programmed to allocate additional threads to the thread pool where a number of events enqueued in the event queue exceeds a threshold value and where all threads in the thread pool are busy.

### SUMMARY

In view of this, the present disclosure provides a job processing method implemented by a computer for solving the technical problem in the prior art of relatively poor job processing effects. In addition, the present disclosure further provides a job processing device for ensuring the application and implementation of the method in practice.

In order to realize the above purpose, the present disclosure provides the following technical solutions.

The first aspect of the present disclosure provides a job processing method implemented by a computer including:
determining a number of unprocessed jobs in target jobs and taking this number as an unprocessed job number;
determining a number of threads which are processing the target jobs and taking this number as a processing thread number;
activating, according to different thread activating rules, corresponding number of new threads based on a size relation between the unprocessed job number and a preset unprocessed threshold and a size relation between the processing thread number and a preset activating thread value; and
triggering the new threads to process the unprocessed jobs;
wherein the preset unprocessed threshold is used for showing that it needs to add new thread where the unprocessed job number reaches the preset unprocessed threshold; and the preset activating thread value is used for representing a minimum value of threads activated for the target jobs.

The second aspect of the present disclosure provides the job processing device including:
an unprocessed job number determining module for determining a number of unprocessed jobs in target jobs and taking this number as an unprocessed job number;
a processing thread number determining module for determining a number of threads which are processing the target jobs and taking this number as a processing thread number;
a new thread activating module for activating, according to different thread activating rules, corresponding number of new threads based on a size relation between the unprocessed job number and a preset unprocessed threshold and a size relation between the processing thread number and a preset activating thread value;
a new thread processing job module for triggering the new threads to process the unprocessed jobs,
wherein the preset unprocessed threshold is used for showing that it needs to add the new thread where the unprocessed job number reaches the preset unprocessed threshold; and the preset activating thread value is used for representing a minimum value of threads activated for the target jobs.

It may be known from the above technical solution that the present disclosure provides the embodiments of the job processing methods in which the unprocessed job number of a certain type of jobs in the system and the current number of the threads processing this type of the jobs are determined firstly, then different thread activating rules are determined based on the size relation between the unprocessed job number and the preset unprocessed threshold for the jobs and the size relation between the current number of the threads and the preset thread activating threshold, and different numbers of new threads are activated according to the different thread activating rules so as to make the new threads process the unprocessed jobs. As such, compared to the prior art of activating a certain fixed number of threads and assigning the fixed jobs to be processed to the threads, the present embodiments may determine the situations of the unprocessed job number and the existing thread number in the system respectively by using the preset unprocessed threshold and the preset thread activating threshold, so as to activate different numbers of the new threads for different situations, which have better job processing effects and may avoid relative large thread maintenance pressure to the system.

### BRIEF DESCRIPTION OF THE DRAWINGS

In order to more clearly explain the embodiments of the present disclosure or the technical solutions of the prior art, the drawings to be used in the descriptions of the embodiments or the prior art are briefly introduced as follows. Obviously, the drawings in the following description are only embodiments of the present disclosure, and the person skilled in the art may further obtain other drawings from these drawings without contributing any creative work.
Fig. 1 is a flow chart of the first embodiment of the job processing method provided by the present disclosure;
Fig. 2 is a flow chart of the second embodiment of the job processing method provided by the present disclosure;
Fig. 3 is a flow chart of the third embodiment of the job processing method provided by the present disclosure; and
Fig. 4 is a structural schematic diagram of the first embodiment of the job processing device provided by the present disclosure.

### DETAILED DESCRIPTION OF THE EMBODIMENTS

The technical solutions in the embodiments of the present disclosure will be clearly and completely described with reference to the drawings in the embodiments of the present disclosure. Obviously, the described embodiments are just parts of the embodiments of the present disclosure rather than all the embodiments. Based on the embodiments of the present disclosure, all the other embodiments obtained by the person skilled in the art without contributing any creative work also fall with the protection scope of the present disclosure.

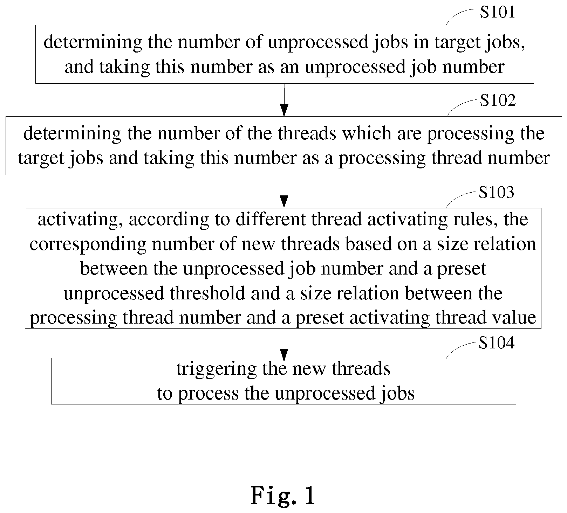

With reference to Fig. 1, a flow chart of the first embodiment of the job processing method provided by the present disclosure is shown. As shown in Fig.1, the present embodiment may specifically include the steps S101 to S104.

Step S101: determining the number of unprocessed jobs in target jobs, and taking this number as the unprocessed job number.

The system contains a plurality of jobs which may be classified into several types, and further a certain type of jobs may be taken as the target job. For example, the types of jobs include a batch query job and a batch display job, and the batch query job is taken as the target job.

It needs to explain that the target jobs contain the processed jobs and the unprocessed jobs. In the target jobs, the unprocessed jobs are determined, and the number of the unprocessed jobs is counted. For convenient description, this number is called as the unprocessed job number JobNum.

It needs to explain that the system may maintain a job table for recording parameters of each job in the system, including the type of job and whether the job is processed. Therefore, the number of the unprocessed jobs in the target jobs (that is, the unprocessed job number JobNum) may be calculated from this job table. The explanation on the job table may refer to the content described hereinafter, and is not described herein.

Step S102: determining the number of the threads which are processing the target jobs and taking this number as a processing thread number.

The system activates a plurality of threads for processing the jobs. In these threads, the threads which are processing the target jobs are determined and the number of these threads is counted. For convenient description, this number may be called as the processing thread number ThreadNum.

It needs to explain that the system may maintain a thread table for recording the states of threads, including whether the thread is processing the job and the specific type of the processed job. Therefore, the number of the threads which are processing the target jobs (that is, the processing thread number ThreadNum) may be determined from this thread table. The explanation on the thread table may refer to the content described hereinafter, and is not described herein.

In addition, the execution orders of this step S102 and step S101 are not limited to Fig. 1, or it is possible that the step S102 is executed and then the step S101 is executed; or the steps S102 and S101 are executed concurrently.

Step S103: activating, according to different thread activating rules, the corresponding number of new threads based on a size relation between the unprocessed job number and a preset unprocessed threshold and a size relation between the processing thread number and a preset activating thread value.

In the above, the preset unprocessed threshold is used for showing that it needs to add new threads if the unprocessed job number reaches the threshold; the preset activating threshold value is used for representing a minimum value of the threads activated for the target jobs. In addition, this preset activating thread value may also be considered as a numerical value of the threads activated for the target jobs in a default manner.

For example, the preset unprocessed threshold is 15. If the unprocessed job number of the target jobs is 17, the unprocessed job number exceeds the preset unprocessed threshold, which shows that it needs to add the new thread. For example, the preset activating thread value is 20, which shows that 20 threads are activated for the target jobs in a default manner to process the target jobs.

It needs to explain that the unprocessed job number has a size relation with the preset unprocessed threshold. Similarly, there is also a size relation between the processing thread number and the preset activating thread value. Different thread activating rules are determined according to the two size relations. For different thread activating rules, the number of the new activating threads is different. Therefore, different number of the new threads may be activated according to the two size relations. The specific thread activating rules may refer to the detail content described hereinafter.

The size relation between the unprocessed job number and the preset unprocessed threshold may specifically be that the unprocessed job number is greater than, equal to or smaller than the preset unprocessed threshold. The unprocessed job number is greater than the preset unprocessed threshold, which shows that there are excessive unprocessed jobs and it needs to add the thread.

Similarly, the size relation between the processing thread number and the preset activating thread value may specifically be that the processing thread number is greater than, equal to or smaller than the preset activating thread value. If the processing thread number does not exceed the preset activating thread value, which shows that the threads existing in the system at present are relatively less in number and it is possible to add the new thread.

As such, in the present embodiment, the job processing situation and the thread existence situation in the system is determined according to the various thresholds. It may be known that if there are excessive unprocessed jobs in the system, it needs to add the thread, but it also needs to consider whether the number of threads currently existing in the system may support the system to start the new thread, in order to avoid overloaded thread maintenance pressure to the system.

Step S104: triggering the new threads to process the unprocessed job.

The activated new threads need to execute a task of processing the job, so the new threads are activated to make the new threads process the unprocessed target jobs. Specifically, the new threads may look up an unprocessed target job in a job pool and randomly select the unprocessed target job to process. It needs to explain that every thread automatically exits or is called as dead after the processing thereof finishes or there is no unprocessed job.

It can be known from the above that the present disclosure provides the embodiment of the job processing method which firstly determines the unprocessed job number in a certain type of jobs in the system and the current number of the threads for processing this type of jobs, then determines different thread activating rules based on the size relation between the unprocessed job number and the preset unprocessed threshold of the job and the size relation between the current thread number and the preset thread activating value, and activates, according to the different thread activating rules, different numbers of the new threads so as to make the new threads process the unprocessed jobs. As such, compared to the prior art of activating a certain fixed number of the threads and assigning the fixed jobs to be processed to the threads, the present embodiment may use the preset unprocessed threshold of the job and the preset thread activating value, respectively determine the situations of the unprocessed job number and the existing thread number in the system, and activates different numbers of the new threads for the different situations, which has better job processing effects and avoids relative large pressure to the system in thread maintenance.

It needs to explain that in the system, the unprocessed job number changes with the jobs being processed by the thread, and the thread exits after completing the process to its job. As such, the thread number and the unprocessed job number in the system are varying. Therefore, for a certain processing stage in the system, the above embodiment may be implemented only once, or may be circularly implemented many times, that is, the above embodiment is performed at every preset time interval until the target jobs are processed completely.

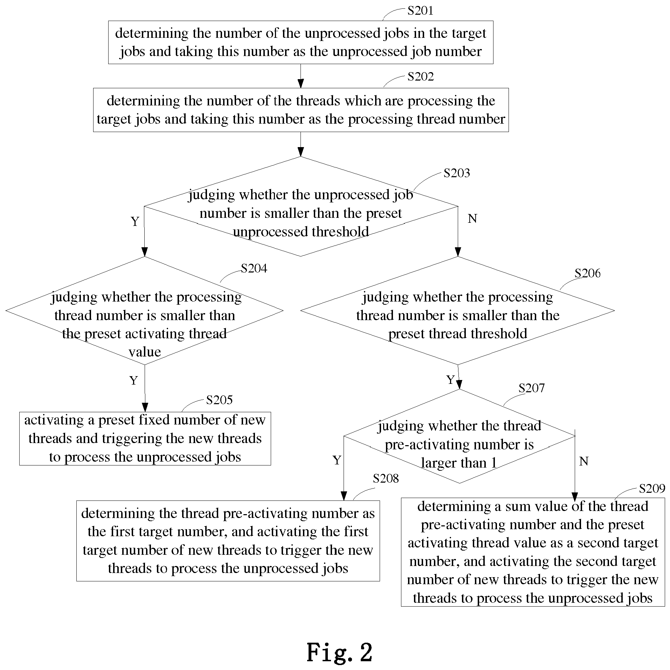

With reference to Fig. 2, a flow chart of the second embodiment of the job processing method provided by the present disclosure is shown. As shown in Fig.2, this embodiment may specifically include the steps S201 to S209.

Step S201: determining the number of the unprocessed jobs in the target jobs, and taking this number as the unprocessed job number.

Step S202: determining the number of the threads which are processing the target jobs and taking this number as the processing thread number.

It needs to explain that the explanations on the step S201 and the step S202 may refer to the above first embodiment of the job processing method, and is not repetitively described herein.

Step S203: judging whether the unprocessed job number is smaller than the preset unprocessed threshold. If yes, the step S204 is executed; and if not, the step S206 is executed.

Step S204: judging whether the processing thread number is smaller than the preset activating thread value. If yes, the step S205 is executed.

Step 205: activating a preset fixed number of the new threads, and triggering the new threads to process the unprocessed jobs.

The precondition of executing this step S205 is that the unprocessed job number (JobNum) is smaller than the preset unprocessed threshold (S), and the processing thread number (ThreadNum) is smaller than the preset activating thread value (D).

Specifically, before implementation, the threshold of the unprocessed jobs may be preset. For convenient description, the threshold of the unprocessed jobs may be called as the preset unprocessed threshold. It needs to explain that the preset unprocessed threshold may be a numerical value set according to various practical factors such as the job processing speed, the system performance, and the like. The present disclosure does not make a specific limitation.

The unprocessed job number is smaller than the preset unprocessed threshold, which shows that the unprocessed target jobs are not too much. Meanwhile, the number of the processing threads which are processing the target jobs in the system is smaller than the preset activating thread value, which shows that the current threads in the system are few, so it is possible to start the preset fixed number of the new threads. This preset fixed number may be the preset activating threshold value D. Of course, this preset fixed number may be another value set by the system according to the practical situation.

Step S206: judging whether the processing thread number is smaller than the preset thread threshold. If yes, the step S207 is executed.

Before implementation, the thread threshold is preset. For convenient description, this threshold may be called as the preset thread threshold (M). It may be known that the system resources are limited. Where excessive threads are activated and maintained, the pressure to the system is overloaded, which influences the running speed of the system. Therefore, the preset thread threshold is used to limit the number of the threads activated and maintained by the system.

The preset thread threshold may be any value set according to factors such as the system performance or the like. In different application scenarios, this value may be different.

Step S207: judging whether a thread pre-activating number is larger than 1. If yes, the step S208 is executed; and if not, the step S209 is executed.

Step S208: determining the thread pre-activating number as a first target number, and activating the first target number of the new threads to trigger the new threads to process the unprocessed jobs.

The precondition of executing this step S208 is that the unprocessed job number is larger than or equal to the preset unprocessed threshold, the processing thread number is smaller than the preset thread threshold, and the thread pre-activating number is larger than 1.

The processing thread number is smaller than the preset thread threshold, which shows that the processing thread number in the system does not reach a limit value and the new thread may be added.

In addition, the thread pre-activating number is determined by (the unprocessed job number - the preset unprocessed threshold)/a preset thread adding interval value. The preset thread adding interval value represents activating one thread for the jobs of each thread adding interval value in the part of the unprocessed job number exceeding the preset unprocessed threshold.

The thread adding interval value (K) may be any integral value greater than or equal to 1, optionally, an integral value greater than 1. In this way, the example does not newly add one thread for every unprocessed job, but to add one thread for a plurality of the jobs, which prevents excessive newly added threads, and brings relatively large thread maintenance pressure to the system.

For example, the thread adding interval value (K) is 5, which shows that it needs to calculate how many 5 is there in the part of the unprocessed job number exceeding the preset unprocessed threshold, thereby determining the number of the threads to be activated.

Further, for example, if the unprocessed job number is 25, and the preset unprocessed threshold is 10, the part of the unprocessed job number exceeding the preset unprocessed threshold is 25-10, that is 15, totally containing three 5s (15/5), so three new threads need to be activated.

It needs to explain that the thread pre-activating number is obtained by subtracting the preset unprocessed threshold from the unprocessed job number and then dividing by the preset thread adding interval value. In practical applications, the obtained thread pre-activating number may by a non-integer value, so the result needs to be rounded to integer. For example, if the unprocessed job number is 23, the preset unprocessed threshold is 10, and the thread adding interval value is 5, (23-10)/5=2.6, and the value obtained after rounding to integer is 2. Therefore, 2 is taken as the thread pre-activating number.

The thread pre-activating number obtained by the above way is the number of the new threads to be activated in the present embodiment.

Step S209: determining a sum value of the thread pre-activating number and the preset activating thread value as a second target number, and activating the second target number of the new threads to trigger the new threads to process the unprocessed jobs.

In summary, the precondition of executing this step S209 is that the unprocessed job number is larger than or equal to the preset unprocessed threshold, the processing thread number is smaller than the preset thread threshold and the thread pre-activating number is smaller than or equal to 1.

It can be known from the above that the thread pre-activating number is obtained by performing a calculation according to the unprocessed job number and the preset value in the system. In the implementation, the value obtained by calculation may be an integral value, or a non-integer value, and may be greater than or equal to 1, or smaller than 1. If the thread pre-activating number is smaller than 1, the value obtained after rounding to integer is 0. In order to avoid activating the new thread with the number of 0, the preset activating thread value may be added on the basis of the thread pre-activating number.

Of course, in the case of the obtained thread pre-activating number being smaller than 1, the second target number may be obtained by other ways. For example, the thread pre-activating number is directly determined to be 1, and the like.

From the above, it can be known how many new threads are activated in the step S208 and this step 209, one of the determining factors being the unprocessed job number in the system. For different processing situations of the jobs in the system, this value is not the same, thereby the thread pre-activating number is not the same. That is, the number of the threads activated in the step S208 and this step 209 each is different from that in the step S205.

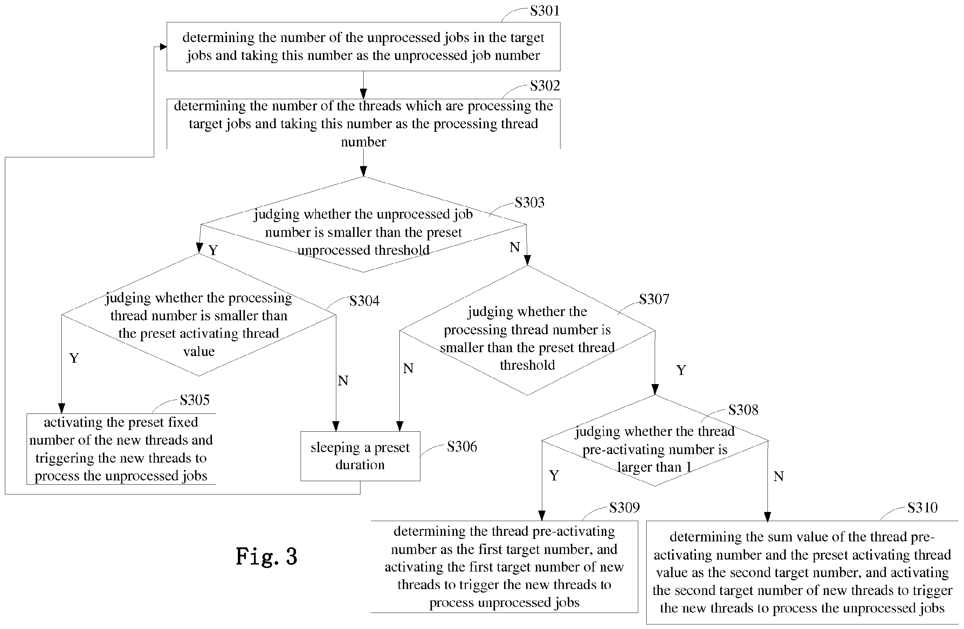

With reference to Fig. 3, a flow chart of the third embodiment of the job processing method provided by the present disclosure is shown. As shown in Fig.3, the present embodiment may specifically include the following steps S301 to S310. The present embodiment is different from the second embodiment of the job processing method in that the newly added step S306 is included. Of course, the execution of this step S306 has the corresponding precondition which will be described in detail in the following. The explanation related to other steps in the present embodiment may refer to the above second embodiment of the job processing method. The present embodiment does not make a specific limitation.

Step S301: determining the unprocessed job number in the target jobs and taking the number as the unprocessed job number.

Step S302: determining the number of the threads for processing the target jobs and taking this number as the processing thread number.

Step S303: judging whether the unprocessed job number is smaller than the preset unprocessed threshold. If yes, the step S304 is executed; and if not, the step S307 is executed.

Step S304: judging whether the processing thread number is smaller than the preset activating thread value. If yes, the step S305 is executed; and if not, the step S306 is executed.

Step 305: activating the preset fixed number of the new threads, and triggering the new threads to process the unprocessed jobs.

Step S306: sleeping a preset duration and then returning to the step S301.

If the unprocessed job number is smaller than the preset unprocessed threshold and the processing thread number is larger than or equal to the preset activating thread value, this step 306 is executed to sleep the preset duration and then return to the step S301 for the next round of performing the job processing method.

It needs to explain that unlike the step S305 of activating the new threads, this step 306 is to sleep. The advantage of such setting is in that the unprocessed jobs are few, and the processing thread number is relatively large, so it can be known that the threads which are processing the current jobs may continue to look up the unprocessed job in the job pool to process after completing the process to the current jobs so long as they do not exit. Therefore, the currently used threads may be used to process the current remaining unprocessed jobs. If the new thread is activated again, the new thread may cause waste of the resources. Therefore, this step is to sleep.

The duration of the sleep is a preset value, which may be any value set according to the specific situation of the system. The present embodiment does not make a specific limitation.

Step S307: judging whether the processing thread number is smaller than the preset thread threshold. If yes, the step S308 is executed; and if not, the step S306 is executed.

Step S308: judging whether the thread pre-activating number is larger than 1. If yes, the step S309 is executed; and if not, the step S310 is executed.

Step S309: determining the thread pre-activating number as the first target number, and activating the first target number of the new threads to trigger the new threads to process the unprocessed jobs. The way of determining the thread pre-activating number is (the unprocessed job number - the preset unprocessed threshold)/the preset thread adding interval value.

Step S310: determining the sum value of the thread pre-activating number and the preset activating thread value as the second target number, and activating the second target number of the new threads to trigger the new threads so as to process the unprocessed jobs.

If the unprocessed job number is larger than or equal to the preset unprocessed threshold and the processing thread number is larger than or equal to the preset thread threshold, the above step S306 is executed to sleep.

Specifically, although the unprocessed job number is larger than or equal to the preset unprocessed threshold, the processing thread number is larger than or equal to the preset thread threshold, which shows that if the threads currently existing in the system has exceeded the threshold, new thresholds cannot be activated, thereby selecting to sleep for a period of time in the present embodiment.

It can be known from the above that, in the special case that the unprocessed job number is few or that excessive threads are activated in the system, it is selected to sleep for a period of time in the present embodiment, so as to prevent the waste of thread resources in the system, or prevent the overloaded thread maintaining pressure to the system.

It needs to explain that in the present embodiment, after the steps 305, S309 and S310, the step S301 may be returned to again for the next round of performing the job processing method.

In practical applications, in the above each of the embodiments, the specific implementation manner of triggering the new threads to process the unprocessed jobs may include the following step A1.

Step A1: setting, for each thread, the respective number of the jobs to be processed, such that each thread processes the unprocessed jobs according to the number of the jobs to be processed thereof.

Specifically, in this implementation, the respective number of the jobs to be processed is set for every new thread. The number of the jobs to be processed of every new thread may be the same or be different from each other. The number of the jobs to be processed may be 1 or an integral value greater than 1. In case of the integral value greater than 1, every new thread needs to process a plurality of the unprocessed jobs before exiting. This implementation may increase the efficiency of processing jobs.

It needs to explain that every thread may exit (be dead) only after completing the process to all the jobs. For example, the number of jobs to be processed set for the thread is 3, so the thread may exit only after completing the process to three unprocessed jobs. Of course, the thread may exit (be dead) if there is no new unprocessed job.

In practical applications, the implementation of determining the number of the unprocessed jobs in the target jobs and taking this number as the unprocessed job number in each embodiment may be that:
in a preset job table, the number of the first records whose job state is "unprocessed" in the target jobs is counted and the number of the first records is taken as the unprocessed job number.

Specifically, the job table is preset, this preset table job is used for recording each parameter information of the jobs, specifically including: a job ID, a job type, a job name and a job state. The job ID is used for uniquely marking one job; the job type represents the type of the job, and may be represented by a code such as 01, 02 and so on; the job name is the name of the job type and corresponds to the job type, such as 01 representing batch enquiry job, 02 representing batch deleting job; and the job state includes: unprocessed, in process, successful process and failing process.

Therefore, if it is desired to determine the unprocessed job number in a certain type of the target jobs, it is possible to look up, from the preset job table, the job whose job state is "unprocessed" and job type is the said type, and further to count the record number of these jobs. For convenient description, this record number is called as the first record number, and may be called as the unprocessed job number.

In practical applications, the implementation of determining the number of the threads which are processing the target jobs and taking this number as the processing thread number may be that:
in the preset thread table, the second number of records whose execution state is "in process" and processed job is marked as the target job is counted and the second number of these records is taken as the processing thread number.

Specifically, the thread table is preset, this preset thread table is used for recording each parameter information of the threads, specifically including: a thread ID, a job type, a job name and a thread execution state. The thread ID is used for uniquely representing one thread in the system; the job type represents the type of the job executed by the thread and may be represented by a code as described above; the job name represents the name of the job type; and the thread execution state represents whether the thread is processing the job, specifically including: unprocessed, in process, successful process and failing process.

Therefore, if it is desired to determine the number of threads which are processing the target jobs, it is possible to look up, from the preset thread table, the number of records whose job type is the target job and thread execution state is "in process", and further to count the number of the records as the second record number which may further be called as the processing thread number.

In addition, the present disclosure may further set a job thread table which is used for recording some values preset for the target jobs, specifically including: the job type, the job name, the preset activating thread value D, the preset thread threshold M, the preset unprocessed job threshold S and the thread adding interval value K.

The job processing device embodiments provided by the present disclosure are introduced below. It needs to explain that the following explanation on the embodiments of the job processing device may refer to that on the embodiments of the job processing method provided in the above, and is not repetitively described below.

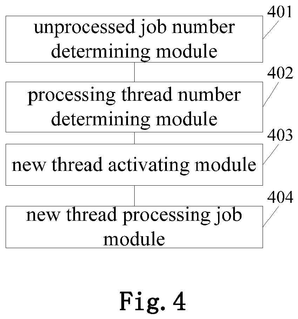

Corresponding to the above first embodiment of the job processing method, the present disclosure provides the first embodiment of the job processing device. With reference to Fig. 4, the present embodiment may specifically include: an unprocessed job number determining module 401, a processing thread number determining module 402, a new thread activating module 403 and a new thread processing job module 404 as follows.

The unprocessed job number determining module 401 determines the number of the unprocessed jobs in the target jobs, and taking this number as the unprocessed job number.

The processing thread number determining module 402 determines the number of the threads which are processing the target jobs and taking this number as processing thread number.

The new thread activating module 403 activates, according to different thread activating rules, the corresponding number of the new threads based on the size relation between the unprocessed job number and the preset unprocessed threshold and the size relation between the processing thread number and the preset activating thread value.

The new thread processing job module 404 triggers the new threads to process the unprocessed jobs.

In above, the preset unprocessed threshold is used for showing that it needs to add new thread(s) if the unprocessed job number reaches this threshold; and the preset activating thread value is used for representing a minimum value of the threads activated for the target jobs.

It can be known from the above that the present disclosure provides the embodiment of the job processing device, in which the unprocessed job number determining module 401 determines the unprocessed job number in a certain type of jobs in the system and the processing thread number determining module 402 determines the number of the threads which are currently processing this type of jobs at first; then the new thread activating module 403 determines different thread activating rules based on the size relation between the unprocessed job number and the preset unprocessed threshold of the job and the size relation between the current thread number and the preset thread activating threshold, and activates different numbers of new threads by the different thread activating rules; and the new thread processing job module 404 makes the new threads process the unprocessed jobs. As such, compared to the prior art of activating a certain fixed number of the threads and assigning the fixed jobs to be processed to the threads, the present embodiment may use the preset unprocessed threshold of the job and the preset thread activating threshold, respectively determine the unprocessed job number and the number of the existing threads in the system, and then activates different numbers of the new threads for different situations, which has better job processing effects and avoids relative large thread maintenance pressure to the system.

In the practical application, in the above job processing device, the new thread activating module 403 may specifically include: a first new thread activating sub module, a second new thread activating sub module and a third new thread activating sub module as follows.

The first new thread activating sub module activates the preset fixed number of the new threads where the unprocessed job number is smaller than the preset unprocessed threshold and the processing thread number is smaller than the preset activating thread value.

The second new thread activating sub module determines the thread pre-activating number as the first target number and activates the first target number of the new threads, where the unprocessed job number is greater than or equal to the preset unprocessed threshold, the processing thread number is smaller than the preset thread threshold and the thread pre-activating number is greater than 7.

The third new thread activating sub module determines the sum value of the thread pre-activating number and the preset activating thread value as the second target number and activates the second target number of the new threads, where the unprocessed job number is greater than or equal to the preset unprocessed threshold, the processing thread number is smaller than the preset thread threshold and the thread pre-activating number is smaller than or equal to 7.

The thread pre-activating number is determined by (the unprocessed job number - the preset unprocessed threshold)/ the preset thread adding interval value, wherein the preset thread adding interval value represents activating one thread for the jobs of each thread adding interval value in the part of the unprocessed job number exceeding the preset unprocessed threshold.

In addition, the above job processing device may further include: a fourth new thread activating sub module and a fifth new thread activating sub module as follows.

The fourth new thread activating sub module triggers the first new thread activating sub module again after sleeping the preset duration, where the unprocessed job number is smaller than the preset unprocessed threshold and the processing thread number is greater than or equal to the preset activating thread value.

The fifth new thread activating sub module triggers the first new thread activating sub module again after sleeping the preset duration, where the unprocessed job number is larger than or equal to the preset unprocessed threshold and the processing thread number is greater than or equal to the preset activating thread value.

In the implementation, in the above job processing device, the new thread processing job module 404 may specifically include: a new thread processing job sub module as follows.

The new thread processing job sub module sets the respective number of the jobs to be processed for every thread, such that each thread processes the unprocessed jobs according to the number of the jobs to be processed thereof.

In practical applications, the unprocessed job number determining module 401 may specifically include: a table determining unprocessed job number sub module as follows.

The table determining unprocessed job number sub module counts, in the preset job table, the number of the first records whose job state is "unprocessed" in the target jobs and determines the number of the first records as the unprocessed job number.

The processing thread number determining module 402 may specifically include: a table determining processing thread number sub module as follows.

The table determining processing thread number sub module counts, in the preset thread table, the number of the second records whose execution state is "in process" and processed job is marked as the target job and determines the number of the second records as the processing thread number.

It needs to explain that each embodiment of the present disclosure is described in a progressive manner, what focuses in each embodiment is the difference from other embodiments, and it is possible that the same or similar parts between each embodiment refer to each other.

As understood by the persons skilled in the art, the job processing device of each embodiment of the present disclosure may be implemented by the computer including a processor configured to execute the steps of the job processing method of each embodiment in the present disclosure. Alternatively, the job processing device may be implemented by a computer including a memory and a processor carrying out the steps of the job processing method in the present disclosure by executing the programs stored on the memory.

It further needs to explain that in the specification, the relation term such as the first and the second is only used for differentiating one entity or operation from another entity or operation, instead of necessarily requiring or implying that the entities or operations have such practical relation or order. Moreover, the term "include(s)", "including", "contain(s)", "containing" or its other variants are intended to cover other non-exclusive inclusion, thereby making the process, method, article or device including a series of elements not only include the elements, but also further include other elements not listed explicitly, or include elements inherent in such process, method, article or device. Without more limitations, the element defined by the sentence "including a..." does not exclude additional same elements existing in the process, method, article or device including the elements.

## Claims

1. A job processing method implemented by a computer, comprising:
determining a number of unprocessed jobs in target jobs and taking this number as an unprocessed job number (S101);
determining a number of threads which are processing the target jobs and taking this number as a processing thread number (S102);
activating (S103), according to thread activating rules, corresponding number of new threads based on a size relation between the unprocessed job number and a preset unprocessed threshold and a size relation between the processing thread number and a preset activating thread value; and
triggering (S104) the new threads to process the unprocessed jobs, wherein the preset unprocessed threshold is used for showing that a new thread needs to be added where the unprocessed job number reaches the preset unprocessed threshold and wherein the preset activating thread value is used for representing a minimum value of the threads activated for the target jobs; wherein the activating, according to the thread activating rules, the corresponding number of the new threads based on the size relation between the unprocessed job number and the preset unprocessed threshold and the size relation between the processing thread number and the preset activating thread value, comprises:
activating (S205) a preset fixed number of the new threads, where the unprocessed job number is smaller than the preset unprocessed threshold and the processing thread number is smaller than the preset activating thread value;
determining a thread pre-activating number as a first target number and activating the first target number of the new threads (S208), where the unprocessed job number is greater than or equal to the preset unprocessed threshold, the processing thread number is smaller than a preset thread threshold and a thread pre-activating number is greater than 1;
determining a sum value of the thread pre-activating number and the preset activating thread value as a second target number, and activating the second target number of the new threads (S209), where the unprocessed job number is greater than or equal to the preset unprocessed threshold, the processing thread number is smaller than the preset thread threshold and the thread pre-activating number is smaller than or equal to 1;
wherein the thread pre-activating number is determined by (the unprocessed job number - the preset unprocessed threshold)/ a preset thread adding interval value; and the preset thread adding interval value represents activating one thread for the jobs of each thread adding interval value in a part of the unprocessed job number exceeding the preset unprocessed threshold.

2. The job processing method according to claim 1, further comprising:
sleeping (S306) a preset duration and then redetermining (S301) the number of the unprocessed jobs in the target jobs again and taking this number as the unprocessed job number, where the unprocessed job number is smaller than the preset unprocessed threshold and the processing thread number is greater than or equal to the preset activating thread value; and
sleeping (S306) the preset duration and then redetermining (S301) the number of the unprocessed jobs in the target jobs again and taking this number as the unprocessed job number, where the unprocessed job number is greater than or equal to the preset unprocessed threshold and the processing thread number is greater than or equal to the preset thread threshold.

3. The job processing method according to claim 1, wherein the triggering the new threads to process the unprocessed jobs comprises:
setting, for each thread, a number of jobs to be processed by itself, such that each thread processes the unprocessed jobs according to the number of the jobs to be processed thereof.

4. The job processing method according to claim 1,
wherein the determining the number of the unprocessed jobs in target jobs and taking this number as the unprocessed job number comprises: counting, in a preset job table, a number of first records whose job state is "unprocessed" in the target jobs and determining the number of the first records as the unprocessed job number; and
wherein the determining the number of the threads which are processing the target jobs and taking this number as the processing thread number comprises: counting, in a preset thread table, a number of second records whose execution state is "in process" and processed job is marked as the target job and determining the number of the second records as the processing thread number.

5. A job processing device, including:
an unprocessed job number determining module (401) for determining a number of unprocessed jobs in target jobs and taking this number as an unprocessed job number;
a processing thread number determining module (402) for determining a number of threads which are processing the target jobs and taking this number as a processing thread number;
a new thread activating module (403) for activating, according to thread activating rules, corresponding number of new threads based on a size relation between the unprocessed job number and a preset unprocessed threshold and a size relation between the processing thread number and a preset activating thread value; and
a new thread processing job module (404) for triggering the new threads to process the unprocessed jobs, wherein the preset unprocessed threshold is used for showing that a new thread needs to be added where the unprocessed job number reaches the preset unprocessed threshold and wherein the preset activating thread value is used for representing a minimum value of the threads activated for the target jobs; wherein the new thread activating module comprises:
a first new thread activating sub module for activating a preset fixed number of the new threads, where the unprocessed job number is smaller than the preset unprocessed threshold and the processing thread number is smaller than the preset activating thread value;
a second new thread activating sub module for determining a thread pre-activating number as a first target number and activating the first target number of the new threads, where the unprocessed job number is greater than or equal to the preset unprocessed threshold, the processing thread number is smaller than a preset thread threshold and the thread pre-activating number is greater than 7; and
a third new thread activating sub module for determining a sum value of the thread pre-activating number and the preset activating thread value as a second target number, and activating the second target number of the new threads, where the unprocessed job number is greater than or equal to the preset unprocessed threshold, the processing thread number is smaller than the preset thread threshold and the thread pre-activating number is smaller than or equal to 7;
wherein the thread pre-activating number is determined by (the unprocessed job number - the preset unprocessed threshold)/ a preset thread adding interval value, and the preset thread adding interval value represents activating one thread for the jobs of each thread adding interval value in a part of the unprocessed job number exceeding the preset unprocessed thresholds.

6. The job processing device according to claim 5, further comprising:
a fourth new thread activating sub module for sleeping a preset duration and then retriggering the first new thread activating sub module, where the unprocessed job number is smaller than the preset unprocessed threshold and the processing thread number is greater than or equal to the preset activating thread value; and
a fifth new thread activating sub module for sleeping the preset duration and then retriggering the first new thread activating sub module, where the unprocessed job number is larger than or equal to the preset unprocessed threshold and the processing thread number is greater than or equal to the preset thread threshold.

7. The job processing device according to claim 5, wherein the new thread processing job module comprises:
a new thread processing job sub module for setting, for each thread, a number of jobs to be processed by itself, such that each thread processes the unprocessed jobs according to the number of the jobs to be processed thereof.

8. The job processing device according to claim 5,
wherein the unprocessed job number determining module comprises: a table determining unprocessed job number sub module for counting, in a preset job table, a number of first records whose job state is "unprocessed" in the target jobs and determining the number of the first records as the unprocessed job number; and
wherein the processing thread number determining module comprises: a table determining processing thread number sub module for counting, in a preset thread table, a number of second records whose execution state is "in process" and processed job is marked as the target job and determining the number of the second records as the processing thread number.

## Patentansprüche

1. Von einem Computer implementiertes Verfahren zur Auftragsbearbeitung, das umfasst:
Bestimmen einer Anzahl von unbearbeiteten Aufträgen unter Zielaufträgen und Verwenden dieser Anzahl als eine Anzahl unbearbeiteter Aufträge (S101);
Bestimmen einer Anzahl von Threads, die die Zielaufträge bearbeiten, und Verwenden dieser Anzahl als eine Anzahl von Bearbeitungs-Threads (S102);
Aktivieren (S103), gemäß Thread-Aktivierungsregeln, einer entsprechenden Anzahl von neuen Threads, basierend auf einer Größenbeziehung zwischen der Zahl der unbearbeiteten Aufträge und einem voreingestellten Schwellenwert für unbearbeitete Aufträge und einer Größenbeziehung zwischen der Zahl der Verarbeitungs-Threads und einem voreingestellten Aktivierungswert für Threads; und
Auslösen (S104) der neuen Threads, um die unbearbeiteten Aufträge zu bearbeiten, wobei der voreingestellte Schwellenwert für unbearbeitete Aufträge verwendet wird, um zu zeigen, dass ein neuer Thread hinzugefügt werden muss, wenn die Anzahl der unbearbeiteten Aufträge den voreingestellten Schwellenwert für unbearbeitete Aufträge erreicht, und wobei der voreingestellte Aktivierungswert für Threads verwendet wird, um einen Mindestwert der für die Zielaufträge aktivierten Threads darzustellen;
wobei das Aktivieren, gemäß den Thread-Aktivierungsregeln, der entsprechenden Anzahl der neuen Threads basierend auf dem Größenverhältnis zwischen der Anzahl der unbearbeiteten Aufträge und dem voreingestellten Schwellenwert für unbearbeitete Aufträge und dem Größenverhältnis zwischen der Anzahl der Verarbeitungs-Threads und dem voreingestellten Aktivierungswert für Threads, umfasst:
Aktivieren (S205) einer voreingestellten festen Anzahl der neuen Threads, wenn Anzahl unbearbeiteter Aufträge kleiner ist als der voreingestellte unbearbeitete Schwellenwert und die Anzahl der Bearbeitungs-Threads kleiner ist als der voreingestellte Aktivierungswert für Threads;
Bestimmen einer Thread-Voraktivierungszahl als eine erste Zielzahl und Aktivieren der ersten Zielzahl von neuen Threads (S208), wenn die Anzahl unbearbeiteter Aufträge größer oder gleich dem voreingestellten Schwellenwert für unbearbeitete Aufträge ist, die Anzahl der Bearbeitungs-Threads kleiner als ein voreingestellter Thread-Schwellenwert ist und eine Thread-Voraktivierungszahl größer als 1 ist;
Bestimmen eines Summenwerts der Thread-Voraktivierungszahl und des voreingestellten Aktivierungswerts für Threads als eine zweite Zielzahl, und Aktivieren der zweiten Zielzahl von neuen Threads (S209), wenn die Anzahl unbearbeiteter Aufträge größer oder gleich dem voreingestellten Schwellenwert für unbearbeitete Aufträge ist, die Anzahl der Bearbeitungs-Threads kleiner als der voreingestellte Thread-Schwellenwert ist und die Thread-Voraktivierungszahl kleiner als oder gleich 1 ist;
wobei die Thread-Voraktivierungszahl gegeben ist durch (Anzahl unbearbeiteter Aufträge - voreingestellter Schwellenwert für unbearbeitete Aufträge) / einen voreingestellten Thread-Addierintervallwert; und der voreingestellte Thread-Addierintervallwert das Aktivieren eines Threads für die Aufträge jedes Thread-Addierintervallwertes in einem Teil der Anzahl unbearbeiteter Aufträge, der den voreingestellten Schwellenwert für unbearbeitete Aufträge überschreitet, darstellt.

2. Verfahren zur Auftragsbearbeitung nach Anspruch 1, das ferner umfasst:
Schlafen (S306) für eine voreingestellte Dauer und dann erneutes Bestimmen (S301) der Anzahl der unbearbeiteten Aufträge unter den Zielaufträgen und Verwenden dieser Anzahl als die Anzahl der unbearbeiteten Aufträge, wenn die Anzahl der unbearbeiteten Aufträge kleiner als der voreingestellte Schwellenwert für unbearbeitete Aufträge ist und die Anzahl der verarbeitenden Threads größer oder gleich dem voreingestellten Aktivierungswert für Threads ist; und
Schlafen (S306) für die voreingestellte Dauer und dann erneutes Bestimmen (S301) der Anzahl der unbearbeiteten Aufträge unter den Zielaufträgen und Verwenden dieser Anzahl als die Anzahl unbearbeiteter Aufträge, wenn die Anzahl der unbearbeiteten Aufträge größer oder gleich dem voreingestellten Schwellenwert für unbearbeitete Aufträge ist und die Zahl der bearbeitenden Threads größer oder gleich dem voreingestellten Schwellenwert für Threads ist.

3. Verfahren zur Auftragsbearbeitung nach Anspruch 1, bei dem das Auslösen der neuen Threads zur Bearbeitung der unbearbeiteten Aufträge umfasst:
Festlegen einer Anzahl von zu bearbeitenden Aufträgen für jeden Thread, so dass jeder Thread die unbearbeiteten Aufträge entsprechend der Anzahl der von ihm zu bearbeitenden Aufträge bearbeitet.

4. Verfahren zur Auftragsbearbeitung nach Anspruch 1,
wobei das Bestimmen der Anzahl der unbearbeiteten Aufträge unter Zielaufträgen und das Verwenden dieser Anzahl als die Anzahl der unbearbeiteten Aufträge umfasst: Zählen einer Anzahl von ersten Datensätzen, deren Auftragsstatus "unbearbeitet" ist, in einer voreingestellten Auftragstabelle unter den Zielaufträgen und Bestimmen der Anzahl der ersten Datensätze als die Anzahl der unbearbeiteten Aufträge; und
wobei das Bestimmen der Anzahl der Threads, die die Zielaufträge verarbeiten, und das Verwenden dieser Anzahl als die Anzahl der Verarbeitungs-Threads umfasst: Zählen einer Anzahl von zweiten Datensätzen in einer voreingestellten Thread-Tabelle, deren Ausführungszustand "in Bearbeitung" ist und deren bearbeiteter Auftrag als der Zielauftrag markiert ist, und Bestimmen der Anzahl der zweiten Datensätze als die Anzahl der Verarbeitungs-Threads.

5. Vorrichtung zur Auftragsbearbeitung , die umfasst:
ein Bestimmungsmodul (401) für die Anzahl unbearbeiteter Aufträge, um eine Anzahl unbearbeiteter Aufträge unter Zielaufträgen zu bestimmen und diese Anzahl als Anzahl unbearbeiteter Aufträge zu verwenden;
ein Bestimmungsmodul (402) für die Anzahl der Verarbeitungs-Threads, um eine Anzahl von Threads zu bestimmen, die die Zielaufträge verarbeiten, und um diese Anzahl als eine Anzahl von Verarbeitungs-Threads zu verwenden;
ein Aktivierungsmodul (403) für neue Threads zum Aktivieren einer entsprechenden Anzahl neuer Threads gemäß Thread-Aktivierungsregeln auf der Grundlage einer Größenbeziehung zwischen der Zahl der unbearbeiteten Aufträge und einem voreingestellten Schwellenwert für unbearbeitete Aufträge und einer Größenbeziehung zwischen der Zahl der Bearbeitungs-Threads und einem voreingestellten Aktivierungswert für Threads; und
ein Auftragsbearbeitungsmodul (404) für neue Threads zum Auslösen der neuen Threads, um die unbearbeiteten Aufträge zu bearbeiten,
wobei der voreingestellte Schwellenwert für unbearbeitete Aufträge verwendet wird, um anzuzeigen, dass ein neuer Thread hinzugefügt werden muss, wenn die Zahl der unbearbeiteten Aufträge den voreingestellten Schwellenwert für unbearbeitete Aufträge erreicht, und wobei der voreingestellte Aktivierungswert für Threads verwendet wird, um einen Mindestwert der für die Zielaufträge aktivierten Threads darzustellen;
wobei das Aktivierungsmodul für neue Threads umfasst:
ein erstes Aktivierungsuntermodul für neue Threads zum Aktivieren einer voreingestellten festen Anzahl der neuen Threads, wenn die Anzahl der unbearbeiteten Aufträge kleiner ist als der voreingestellte Schwellenwert für unbearbeitete Aufträge und die Anzahl der Bearbeitungs-Threads kleiner ist als der voreingestellte Aktivierungswert für Threads;
ein zweites Aktivierungsuntermodul für neue Threads zum Bestimmen einer Thread-Voraktivierungszahl als eine erste Zielzahl und zum Aktivieren der ersten Zielzahl der neuen Threads, wenn die Zahl der unbearbeiteten Aufträge größer oder gleich dem voreingestellten Schwellenwert für unbearbeitete Aufträge ist, die Zahl der bearbeitenden Threads kleiner als ein voreingestellter Schwellenwert für Threads ist und die Thread-Voraktivierungszahl größer als 7 ist; und
ein drittes Aktivierungsuntermodul für neue Threads zum Bestimmen eines Summenwerts der Thread-Voraktivierungszahl und des voreingestellten Aktivierungswerts für Threads als eine zweite Zielzahl und Aktivieren der zweiten Zielzahl von neuen Threads, wenn die Anzahl unbearbeiteter Aufträge größer oder gleich dem voreingestellten Schwellenwert für unbearbeitete Aufträge ist, die Anzahl der bearbeitenden Threads kleiner als der voreingestellte Schwellenwert für Threads ist und die Thread-Voraktivierungszahl kleiner als oder gleich 7 ist;
wobei die Thread-Voraktivierungszahl gegeben ist durch (Anzahl unbearbeiteter Aufträge - voreingestellter Schwellenwert für unbearbeitete Aufträge) / einen voreingestellten Thread-Addierintervallwert, und der voreingestellte Thread-Addierintervallwert das Aktivieren eines Threads für die Aufträge jedes Thread-Addierintervallwertes in einem Teil der Anzahl unbearbeiteter Aufträge, der die voreingestellten Schwellenwerte für unbearbeitete Aufträge überschreitet, darstellt.

6. Vorrichtung zur Auftragsverarbeitung nach Anspruch 5, die ferner umfasst:
ein viertes Aktivierungsuntermodul für einen neuen Thread, zum Schlafen für eine voreingestellte Dauer und zum anschließenden erneuten Auslösen des ersten Aktivierungsuntermoduls für einen neuen Thread, wenn die Zahl der unbearbeiteten Aufträge kleiner ist als der voreingestellte Schwellenwert für unbearbeitete Aufträge und die Zahl der verarbeitenden Threads größer oder gleich dem voreingestellten Aktivierungswert für Threads ist; und
ein fünftes Aktivierungsuntermodul für einen neuen Thread zum Schlafen für die voreingestellte Dauer und zum anschließenden erneuten Auslösen des ersten Aktivierungsuntermoduls für einen neuen Thread, wenn die Zahl der unbearbeiteten Aufträge größer oder gleich dem voreingestellten Schwellenwert für unbearbeitete Aufträge ist und die Zahl der bearbeitenden Threads größer oder gleich dem voreingestellten Schwellenwert für Threads ist.

7. Vorrichtung zur Auftragsverarbeitung nach Anspruch 5, bei der das Auftragsbearbeitungsmodul für neue Threads umfasst:
ein Auftragsbearbeitungsuntermodul für neue Threads zum Einstellen einer Anzahl von Aufträgen für jeden Thread, die von diesem selbst verarbeitet werden sollen, so dass jeder Thread die unbearbeiteten Aufträge entsprechend der Anzahl der von ihm zu bearbeitenden Aufträge verarbeitet.

8. Vorrichtung zur Auftragsverarbeitung nach Anspruch 5,
bei der das Modul zum Bestimmen der Anzahl der unbearbeiteten Aufträge umfasst: ein Bestimmungsuntermodul für die Anzahl der unbearbeiteten Aufträge, zum Zählen, in einer voreingestellten Auftragstabelle, einer Anzahl von ersten Datensätzen unter den Zielaufträgen, deren Auftragsstatus "unbearbeitet" ist, und zum Bestimmen der Anzahl der ersten Datensätze als die Anzahl der unbearbeiteten Aufträge; und
wobei das Bestimmungsmodul für die Anzahl der verarbeitenden Threads umfasst: ein Bestimmungsuntermodul für die Anzahl der verarbeitenden Threads, um in einer voreingestellten Thread-Tabelle eine Anzahl von zweiten Datensätzen zu zählen, deren Ausführungsstatus "in Bearbeitung" ist und deren bearbeiteter Auftrag als der Zielauftrag markiert ist, und zum Bestimmen der Anzahl der zweiten Datensätze als die Anzahl der verarbeitenden Threads.

## Revendications

1. Procédé de traitement de tâches mis en œuvre par un ordinateur, comprenant les étapes consistant à :
déterminer un nombre de tâches non traitées parmi des tâches cibles et prendre ce nombre en tant que nombre de tâches non traitées (S101) ;
déterminer un nombre d'unités d'exécution qui traitent les tâches cibles et prendre ce nombre en tant que nombre d'unités d'exécution de tâches (S102) ;
activer (S103), selon des règles d'activation d'unités d'exécution, un nombre correspondant de nouvelles unités d'exécution sur la base d'une relation de taille entre le nombre de tâches non traitées et un seuil non traité préétabli et d'une relation de taille entre le nombre d'unités d'exécution de traitement et une valeur d'unités d'exécution d'activation préétablie ; et
déclencher (S104) les nouvelles unités d'exécution pour traiter les tâches non traitées,
dans lequel le seuil non traité préétabli est utilisé pour montrer qu'une nouvelle unité d'exécution doit être ajoutée lorsque le nombre de tâches non traitées atteint le seuil non traité préétabli et dans lequel la valeur d'unités d'exécution d'activation préétablie est utilisée pour représenter une valeur minimale des unités d'exécution activées pour les tâches cibles ;
dans lequel l'activation, selon les règles d'activation d'unités d'exécution, le nombre correspondant des nouvelles unités d'exécution sur la base de la relation de taille entre le nombre de tâches non traitées et le seuil non traité préétabli et de la relation de taille entre le nombre le nombre d'unités d'exécution de traitement et la valeur d'unités d'exécution d'activation préétablie, comprend :
activer (S205) un nombre fixe préétabli des nouvelles unités d'exécution, où le nombre de tâches non traitées est plus petit que le seuil non traité préétabli et le nombre d'unités d'exécution de traitement est plus petit que la valeur d'unités d'exécution d'activation préétablie ;
déterminer un nombre de pré-activations d'unités d'exécution en tant que premier nombre cible et activer le premier nombre cible des nouvelles unités d'exécution (S208), où le nombre de tâches non traitées est supérieur ou égal au seuil non traité préétabli, le nombre d'unités d'exécution de tâches est inférieur à un seuil d'unités d'exécution préétabli et un nombre de pré-activations d'unités d'exécution est supérieur à 1 ;
déterminer une valeur de somme du nombre de pré-activations d'unités d'exécution et de la valeur d'unités d'exécution d'activation préétablie en tant que second nombre cible, et activer le second nombre cible des nouvelles unités d'exécution (S209), où le nombre de tâches non traitées est supérieur ou égal au seuil non traité préétabli, le nombre d'unités d'exécution de traitement est inférieur au seuil d'unités d'exécution préétabli et le nombre de pré-activations d'unités d'exécution est inférieur ou égal à 1 ;
dans lequel le nombre de pré-activations d'unités d'exécution est déterminé par (le nombre de tâches non traitées - le seuil non traité préétabli)/une valeur d'intervalle d'addition d'unités d'exécution préétablie ; et la valeur d'intervalle d'addition d'unités d'exécution préétablie représente l'activation d'une unité d'exécution pour les tâches de chaque valeur d'intervalle d'addition d'unités d'exécution dans une partie du nombre de tâches non traitées dépassant le seuil non traité préétabli.

2. Procédé de traitement de tâches selon la revendication 1, comprenant en outre :
mettre en veille (S306) une durée préétablie, puis redéterminer (S301) le nombre des tâches non traitées dans les tâches cibles et prendre ce nombre en tant que nombre de tâches non traitées, où le nombre de tâches non traitées est inférieur au seuil non traité préétabli et le nombre d'unités d'exécution de traitement est supérieur ou égal à la valeur d'unités d'exécution d'activation préétablie ; et
mettre en veille (S306) la durée préétablie, puis redéterminer (S301) le nombre des tâches non traitées dans les tâches cibles et prendre ce nombre en tant que nombre de tâches non traitées, où le nombre de tâches non traitées est supérieur ou égal au seuil non traité préétabli et le nombre d'unités d'exécution de traitement est supérieur ou égal au seuil de tâches préétabli.

3. Procédé de traitement de tâches selon la revendication 1, dans lequel le déclenchement des nouvelles unités d'exécution pour traiter les tâches non traitées comprend l'étape consistant à :
établir, pour chaque unité d'exécution, un nombre de tâches à traiter par en propre, de sorte que chaque unité d'exécution traite les tâches non traitées en fonction du nombre de tâches à traiter de celle-ci.

4. Procédé de traitement de tâches selon la revendication 1,
dans lequel la détermination du nombre de tâches non traitées dans les tâches cibles et la prise de ce nombre en tant que nombre de tâches non traitées comprend les étapes consistant à : compter, dans une table de tâches préétablie, un nombre de premiers enregistrements dont l'état de tâche est « non traitée » dans les tâches cibles et déterminer le nombre des premiers enregistrements en tant que nombre de tâches non traitées ; et
dans lequel la détermination du nombre des unités d'exécution qui traitent les tâches cibles et la prise de ce nombre en tant que nombre d'unité d'exécution de traitement comprend les étapes consistant à : compter, dans une table de tâches préétablie, un nombre de seconds enregistrements dont l'état d'exécution est « en cours de traitement » et la tâche traitée est marqué en tant que cible, et déterminer le nombre des seconds enregistrements comme nombre d'unité d'exécution de traitement.

5. Dispositif de traitement de tâches, comprenant :
un module de détermination de nombre de tâches non traitées (401) pour déterminer un nombre de tâches non traitées parmi des tâches cibles et prendre ce nombre en tant que nombre de tâches non traitées ;
un module de détermination de nombre d'unités d'exécution de tâches (402) pour déterminer un nombre d'unités d'exécution qui traitent les tâches cibles et prendre ce nombre en tant que nombre d'unités d'exécution de tâches ;
un module d'activation de nouvelles unités d'exécution (403) pour activer, selon des règles d'activation d'unités d'exécution, un nombre correspondant de nouvelles unités d'exécution sur la base d'une relation de taille entre le nombre de tâches non traitées et un seuil non traité préétabli et d'une relation de taille entre le nombre d'unités d'exécution de traitement et une valeur d'unités d'exécution d'activation préétablie ; et
un module de tâches de traitement de nouvelles unités d'exécution (404) pour déclencher les nouvelles unités d'exécution pour traiter les tâches non traitées,
dans lequel le seuil non traité préétabli est utilisé pour montrer qu'une nouvelle unité d'exécution doit être ajoutée lorsque le nombre de tâches non traitées atteint le seuil non traité préétabli et dans lequel la valeur d'unités d'exécution d'activation préétablie est utilisée pour représenter une valeur minimale des unités d'exécution activées pour les tâches cibles ;
dans lequel le module d'activation de nouvelles unités d'exécution comprend :
un premier sous-module d'activation de nouvelles unités d'exécution pour activer un nombre fixe préétabli des nouvelles unités d'exécution, où le nombre de tâches non traitées est inférieur au seuil non traité préétabli et le nombre d'unités d'exécution de traitement est inférieur à la valeur d'unité d'exécution d'activation préétablie ;
un deuxième sous-module d'activation de nouvelles unités d'exécution pour déterminer un nombre de pré-activations d'unité d'exécution en tant que premier nombre cible et activer le premier nombre cible des nouvelles unités d'exécution, où le nombre de tâches non traitées est supérieur ou égal au seuil non traité préétabli, le nombre d'unités d'exécution de traitement est inférieur à un seuil d'unités d'exécution préétabli et le nombre de pré-activation d'unités d'exécution est supérieur à 7 ; et
un troisième sous-module d'activation de nouvelles unités d'exécution déterminer une valeur de somme du nombre de pré-activations d'unités d'exécution et de la valeur d'unités d'exécution d'activation préétablie en tant que second nombre cible, et activer le second nombre cible des nouvelles unités d'exécution, où le nombre de tâches non traitées est supérieur ou égal au seuil non traité préétabli, le nombre d'unités d'exécution de traitement est inférieur au seuil d'unités d'exécution préétabli et le nombre de pré-activations d'unités d'exécution est inférieur ou égal à 7 ;
dans lequel le nombre de pré-activations d'unités d'exécution est déterminé par (le nombre de tâches non traitées - le seuil non traité préétabli)/une valeur d'intervalle d'addition d'unités d'exécution préétablie ; et la valeur d'intervalle d'addition d'unités d'exécution préétablie représente l'activation d'une unité d'exécution pour les tâches de chaque valeur d'intervalle d'addition d'unités d'exécution dans une partie du nombre de tâches non traitées dépassant les seuils non traités préétablis.

6. Dispositif de traitement de tâches selon la revendication 5, comprenant en outre :
un quatrième nouveau sous-module d'activation de nouvelles unités d'exécution pour mettre en veille une durée préétablie, puis pour redéclencher le premier sous-module d'activation de nouvelles unités d'exécution, où le nombre de tâches non traitées est plus petit que le seuil non traité préétabli et le nombre d'unités d'exécution de traitement est supérieur ou égal à la valeur d'unités d'exécution d'activation préétablie ; et
un cinquième nouveau sous-module d'activation de nouvelles unités d'exécution pour mettre en veille pendant la durée préétablie, puis pour redéclencher le premier sous-module d'activation de nouvelles unités d'exécution, où le nombre de tâches non traitées est supérieur ou égal au seuil non traité préétabli et le nombre d'unités d'exécution de traitement est supérieur ou égal au seuil d'unités d'exécution préétabli.

7. Dispositif de traitement de tâches selon la revendication 5, dans lequel le module de tâches de traitement de nouvelles unités d'exécution comprend :
un nouveau sous-module de tâche de traitement de nouvelles unités d'exécution pour définir, pour chaque unité d'exécution, un nombre de tâches à traiter en propre, de sorte que chaque unité d'exécution traite les tâches non traitées en fonction du nombre de tâches à traiter de celle-ci.

8. Dispositif de traitement de tâches selon la revendication 5,
dans lequel le module de détermination de nombre de tâches non traitées comprend :
une table de détermination de sous-module de nombre de tâches non traitées pour compter, dans une table de tâches préétablie, un nombre de premiers enregistrements dont l'état de tâche est « non traitée » dans les tâches cibles et pour déterminer le nombre des premiers enregistrements en tant que nombre de tâches non traitées ; et
dans lequel le module de détermination de nombre d'unités d'exécution de traitement comprend : une table de détermination de sous-module de nombre d'unités d'exécution de traitement pour compter, dans une table d'unités d'exécution préétablie, un nombre de seconds enregistrements dont l'état d'exécution est « en cours de traitement » et la tâche traitée est marquée en tant que tâche cible et pour déterminer le nombre des seconds enregistrements en tant que nombre d'unités d'exécution de traitement.
